# EUROPEAN PATENT APPLICATION

(11) **EP 1 447 347 A1**
(43) Date of publication of application: **18.08.2004**
(21) Application number: 03447025.2
(22) Date of filing: 13.02.2003
(51) Int. Cl.: B65D 75/10, B65D 75/16, B65D 85/60, B65D 65/42

(54) **Lollipop packaging**

(71) Applicant: Amcor Flexibles Europe A/S, 8700 Horsens (DK)
(72) Inventor: Vints, Mark, 9000 Ghent (BE); Plaetinck, Lieven, 9270 Laarne-Kalken (BE)
(74) Representative: Van Malderen, Michel

(57) **Abstract**

The present invention is related to a lollipop wrapper material (1) suitable for high speed packaging machines, comprising a flexible mono- or multilayer substrate (5) wherein said wrapper material (1) further comprises at least one funtional coating layer (4,6) on the outside and/or the inside of said flexible substrate (5), said outside functional coating layer (4) having properties of high heat resistance and/or controlled seal strength, and said inside functional coating layer (6) having properties of controlled seal strength and/or low seal initiation temperature.
Furthermore, the invention is related to a method for the production of a lollipop wrapper material.

## Description

### Field of the invention

The present invention is related to the field of bunchwrap and twistwrap packaging for lollipops, and more particularly to an improved packaging material leading to ultra-high packaging speed performance.

### Introduction and State of the art

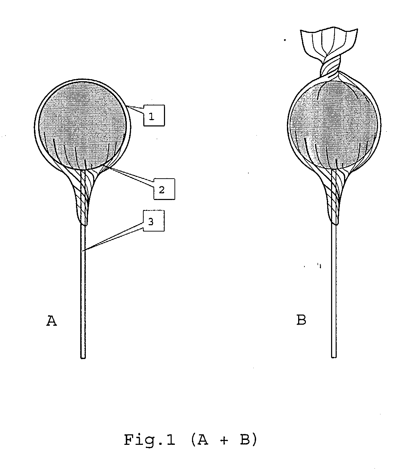

The packaging technology of lollipops is practised widely and well known by packaging insiders. Depending on the machine type chosen and the marketing aspects of the product, generally two packaging types are in current use:
(i) a bunchwrap package, where the confectionery (candy) is placed in the middle of a generally square and flat piece of flexible packaging material, and where the four corners of the piece of packaging material are folded towards the stick and wrapped around it by a twisting motion. This version of lollipop packaging is represented in Fig. 1A;
(ii) a twistwrap package, where a generally rectangular piece of flexible packaging material is wrapped into a cylindrical shape around the candy, after which the part extending towards the stick is twisted around the stick, and simultaneously the part towards the top is twisted onto itself. This version of lollipop packaging is represented in Fig. 1B.

Historically, flexible packaging materials (substrates) used for these lollipop wrappers are mainly wax-coated paper, and regenerated cellulose film (cellophane); more recently, largely for price reasons, other materials have become common such as biaxially oriented polypropylene film (BOPP), cast film of a polypropylene (PP) / polystyrene (PS) blend, cast polyolefine (PO) copolymer film, monoaxially oriented high density polyethylene film (HDPE), polyvinyl chloride film (PVC), and polyester film (PET) coated with a heat-sealable lacquer. Most of these materials can, on adequate packaging lines, achieve packaging speeds of a few hundred pieces per minute. For the example of acrylic coated BOPP film, which has become a popular choice as lollipop wrapper material, typical standard machine settings are sealing temperatures of about 180°C to reach packing speeds of about 300 lollipops per minute.

More than just by the mechanical technology needed to build and operate the packaging machinery, a further increase in packaging speed and productivity has been limited by aspects related to the packaging material itself, more specifically its error-free passage through the machine and, where applicable, its sealing properties.

With regard to running characteristics on the machine, desirable properties of the packaging material include a delicate balance between stiffness, resistance to curling, cuttability, friction against machine parts, etc.

With regard to sealing properties, it must be noted that, unlike some other packaging materials, acrylic coated BOPP film does not retain its position when twisted but rather tends to open up again. For this reason, a certain amount of heat is applied to the film in order to heat-seal it into its twisted position, and the success of for example the acrylic coated BOPP film in high-speed lollipop wrapping is certainly due to its excellent heat seal properties.

Given that a certain temperature on the inside of the wrapping material must be reached in order to seal it, it is generally known, by those skilled in flexible packaging, that a higher temperature must be set on the heat source (e.g. sealing jaws) which contacts the outside of the wrapping material. This temperature difference increases with increasing material thickness and with decreasing seal contact time. Therefore a practical upper limit on the achievable machine speed is reached when the contact time becomes so short that the high seal temperature necessary on the heat source causes the outside of the packaging material to become overheated (burned) before the inside is warm enough to seal.

In practical packaging operations, the high sealing temperatures mandated by the running speeds of the machine also cause such severe sealing conditions that the wrapper material is strongly welded against itself and, in the case of compatible materials, against the stick of the lollipop. It therefore becomes difficult to easily remove the wrapper since it has become much stronger in the part where it is opened (the twisted part around the stick) because of multiple overlapping layers strongly fused together.

In the technical background of lollipop packaging, the problem of high speed wrapping of lollipops is generally approached by packaging-machine improvements. Information on such improvements is notably given in the document EP 0718192-A1 (apparatus for wrapping a lollipop in a single twist wrapping), or specific lollipop wrapping machines as described in WO 00/21835 or in US-P 4,459,792, as well as specific methods or devices for the positioning of the wrappers of lollipops. Extensive patent literature on such specific mechanical improvements is available.

The prior art related specifically to the modification of the wrapping film for lollipops in order to reach high packaging speeds is rather poor. The US patent 2, 205, 210 is related to adhesion-free transparent wrappers for candy. This document written in 1939 does not consider the problems of high-speed lollipop packaging equipment that was not available at that time.

The document EP 1080877 A2, which seems to be the closest prior art to the present application, discloses a bunchwrap film for lollipop packaging with a peripheral seal layer of vinyl and acrylic polymers or epoxy lacquers. In this application, sealing temperatures between 180°C and 230°C are claimed, which would not qualify as substantially low sealing temperatures. As described, the peripheral seal layer, which is not in contact with the lollipop, can be included in the printing ink and applied via a printing machine. This technique provides sealability to an otherwise non-sealable PET substrate but has no ambition to address the issues of machine speed and easy opening of the wrapper, which are the purpose of the present invention.

### Aims of the invention

The present invention aims to provide a flexible packaging wrapper for lollipops suitable to be used on ultra-high speed packaging machinery and a method therefore. A second aim of the present invention is to improve the opening characteristics of such ultra-high speed packed lollipops.

### Summary of the invention

The present invention discloses a lollipop wrapper material suitable for high speed packaging machines, comprising a flexible mono- or multilayer substrate characterised in that said wrapper material (1) further comprises at least one functional coating layer on the outside and/or the inside of said flexible substrate, said outside functional coating layer having properties of high heat resistance and/or controlled seal strength, and said inside functional coating layer having properties of controlled seal strength and/or low seal initiation temperature.

In the present invention, said functional coating layer inside, and/or outside, is an all-over and/or a patterned functional coating layer.

Furthermore, the invention discloses that said outside functional coating layer is selected from the group consisting of cellulosics, epoxies, and crosslinked polyesters, polyethers, acrylates, polymers and copolymers of vinyl chloride and vinyl acetate and its derivatives, and mixtures thereof.

Additionally, the invention shows that the inside functional coating layer is selected from the group consisting of olefin and olefin/acid copolymers, ionomers, polymers and copolymers of vinyl chloride, vinylidene chloride, vinyl acetate and its derivatives, modified cellulosics, polyurethanes, polyester polymers and copolymers, polyamide polymers and copolymers, latex based coatings and mixings thereof.

The flexible mono- or multilayer substrate of the present invention, comprises a film selected from the group consisting of regenerated cellulose, PVC, PET, PP, PP/PS and HDPE.

Additionally, said flexible mono- or multilayer substrate comprises at least one heat sealable layer.

In a particular embodiment of the present invention the flexible multilayer substrate is a biaxially oriented polypropylene film comprising on each side a heat sealable acrylic lacquer, and in that the high-temperature resistant coating layer is based on nitro-cellulose.

Furthermore, the present invention discloses a method for the production of a lollipop wrapper material suitable for bunchwrap and twistwrap packaging on high speed packaging machines, comprising a flexible mono- or multilayer substrate characterised in that at least one all-over and/or patterned functional coating layer is applied on at least one side of said flexible substrate to control heat resistance and/or seal strength and/or seal initiation temperature of said flexible substrate.

A particular embodiment of the present invention discloses a method for the production of a lollipop wrapper material characterised in that the polymer used for the functional coating is mixed to the printing ink.

Another embodiment of the present invention discloses a method for the production of a lollipop wrapper material as in any of the previous claims characterised in that said functional coating is positioned in register with the printing on the flexible mono- or multilayer substrate.

Finally, the present invention discloses the use of the wrapper material as described in any of the previous claims for lollipop or confectionery (candy) packaging.

### Short description of the drawings

Fig. 1A represents a bunchwrap packed lollipop.

Fig. 1B represents a twistwrap packed lollipop.

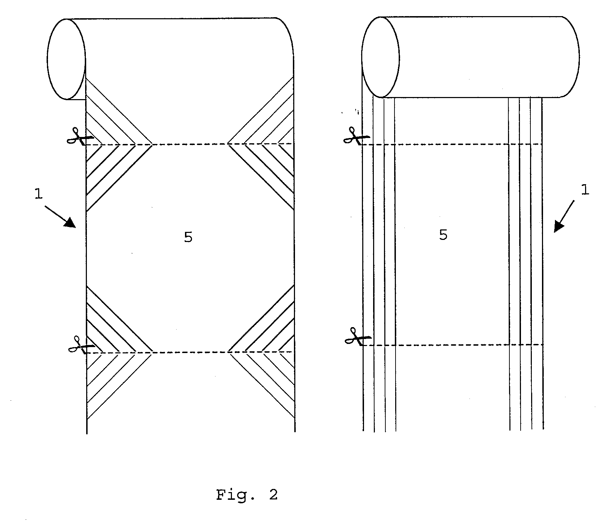

Fig. 2A represents an example of a packaging material for a lollipop with functional coating layer in the corners for bunchwrap packaging.

Fig. 2B represents an example of a packaging material for a lollipop with functional coating layer on the opposite ends for twistwrap packaging.

Fig. 3A to H represent the principle of all-over or patterned positioning of the different functional layers on the flexible mono- or multilayer substrate.

### Detailed description of the invention

The present invention discloses flexible packaging materials suitable as a wrapper 1 for lollipops, comprising a flexible mono- or multilayer substrate 5 as commonly used in conventional bunch- and twistwrap packaging operations, whereby the original running characteristics and/or sealing properties of the substrate are modified by the application of at least one functional coating layer on said substrate 5, to control the behaviour of said lollipop packaging such that the packaging machine can be run at higher speeds and/or the wrapper is easier opened.

In the following description, "functional coating layer" should be understood as an outside coating 4 being able to control the heat resistance and/or the seal strength of the substrate 5, or an inside coating 6 being able to control the seal initiation temperature and/or the seal strength of the substrate 5 onto itself and/or onto the stick 3.

Upon seeking to improve the high-speed running characteristics of acrylic coated BOPP film, the inventors have discovered that the application of a nitro-cellulose based coating on the outside of the substrate, in the area 2 where the film is twisted around the stick 3 and heat sealed, improves the heat resistance of the substrate without impeding its heat conductivity. In that way, higher seal temperatures can be set, and consequently, the machine speed can be increased up to the point where the higher seal temperature is offset by the reduced seal contact time.

The inventors furthermore discovered that a nitro-cellulose based coating not only improves the heat resistance of the substrate but also has heat seal properties of reduced strength compared to an acrylic coating, which results in a less strongly sealed twist 2 which is easier to open.

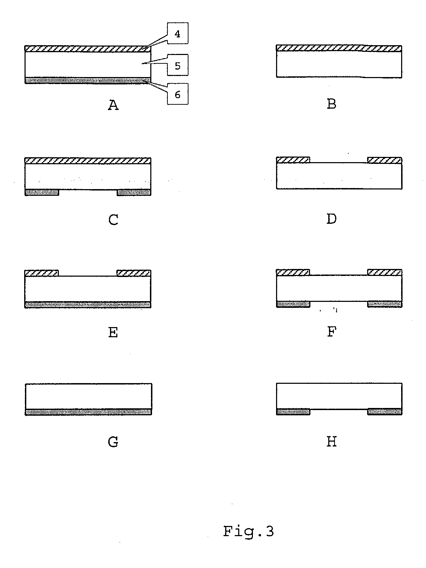

In this fashion a concept became clear of modifying the existing packaging material via a functional coating layer (4,6) able to control the heat resistance on the outside of the wrapper, the seal initiation temperature on the inside of the wrapper, and/or the seal strength of each side of the wrapper. Several combinations of materials exist which can achieve at least one of these effects. Some coating materials also exist which offer one of the mentioned benefits but decrease on the performance of the substrate in one of the other parameters. In such cases it may be beneficial to apply the functional coating in a pattern only partly covering the heat seal area, so that a compromise is achieved (see Fig.3C, D, E, F, H).

In a first embodiment of the present invention a functional coating layer 4 is applied onto the outside (not in contact with the candy) of the flexible mono- or multilayer substrate 5, said coating material having a higher heat resistance than said substrate, and having been selected for the purpose of achieving a higher machine speed for the wrapping of lollipops. In this case the functional coating material has a sealing strength suitable for the intended purpose, and said coating can be applied all over the substrate, as represented in Fig. 3B, in the heat seal area, and even all over the entire wrapper substrate should this be wanted, so that a maximum benefit in its heat-resisting properties is achieved. Typical polymers to reach this effect are for instance cellulosics such as nitrocellulose, ethyl cellulose and cellulose aceto propionate.

In a second embodiment of the present invention an outside functional coating layer 4 with higher heat resistance than the flexible mono- or multilayer substrate 5 is selected, for the purpose of achieving higher machine speeds, and in this case the coating has a seal strength too low for the intended purpose, such that it can be applied in the heat seal area in a pattern not fully covering the substrate, to achieve a compromise between the desired heat resistance and the effective sealing strength properties. This patterned coating on the outside of the substrate, represented in Fig. 3D, can go from macroscopic blocks or lines or other figures, to a halftone printing pattern. Typical coatings to which this description applies are for instance crosslinked materials made of epoxies, acrylates, copolymers of vinyl chloride and vinyl acetate and its derivatives, polyesters, polyethers, and mixtures thereof.

A third embodiment of the present invention is the use of a functional coating layer 6 on the inside of the wrapper (the side in contact with the candy) which has reduced sealing strength. This can be realised either in the form of an all-over coating in the heat seal area, represented in Fig.3G, or a patterned coating, represented in Fig. 3H.

In this embodiment, in the absence of a significant difference of seal initiation temperature between the flexible mono- or multilayer substrate 5 and the functional coating layer 6, no machine speed advantage is achieved, but the reduced seal strength obtained by the functional layer 6 onto itself and/or onto the stick 3 of the lollipop allows an easy opening wrapper. Typical materials that show the behaviour detailed in this embodiment are for example copolymers of vinyl chloride, vinylidene chloride, vinyl acetate and its derivatives and mixtures thereof, as well as certain modified nitrocellulose resins, polyester polymers and copolymers, polyamide polymers and copolymers, and acrylates.

In a fourth embodiment, a functional coating layer 4 with high heat resistance and suitably reduced sealing properties can be applied onto the outside of the flexible wrapper substrate 5 while simultaneously a functional coating layer 6 with reduced seal initiation temperature is applied onto the inside of the wrapper substrate. Typical polymers with reduced seal initiation temperature, known from those skilled in the art, are for instance certain olefin and olefin/acid copolymers, ionomers, polyurethanes and latex based coatings.

This combination, when suitably selected materials are used, provides the ultimate gain in machine running speed. Additionally, an optimal easy opening of the wrapper can be achieved through suitably selected materials, since in this embodiment all sealing combinations (inside on inside, inside on outside, outside on outside, and wrapper against stick) are modified. This embodiment is represented in Fig. 3A, Fig. 3C, Fig. 3E and Fig. 3F.

A further embodiment involving an outside functional coating layer 4 on the wrapper substrate 5 is realised by incorporating the desired heat protection and/or sealing modifier into the printing inks applied onto the outside of the wrapper.

The application of an outside functional coating layer 4 which would not be included in the printing ink, can also be performed optionally in register with the printed design.

An additional advantage of the present invention, is that the modification of a lollipop wrapper substrate by application of a functional coating layer 4 or 6 provides an opportunity for simultaneous fine-tuning of the material characteristics with regard to static and dynamic friction, antistatic properties, gloss and aspect, stiffness, folding properties, etc., which can be seen as having an impact on its machine running characteristics, its appearance and its functioning as a packaging material.

A preferred embodiment of the present invention is the use of a biaxially oriented polypropylene substrate coated on each side with an acrylic seal lacquer as a flexible multilayer substrate 5 on which a functional layer 4 in form of a nitro-cellulose-based coating is applied on the outside; said nitro-cellulose-based coating having an improved heat resistance and a reduced seal strength compared to the substrate. This achieves a higher speed and simultaneously an easy opening.

Nitrocellulose overcoated acrylic coated BOPP film was able to support a sealing temperature setting of about 255°C and in this case machine running speeds of 600 lollipops per minute could be achieved.

### Legend

1. Lollipop wrapper
2. Twisted wrapper
3. Lollipop stick
4. Outside functional coating layer
5. Flexible mono- or multilayer substrate
6. Inside functional coating layer

## Claims

1. Lollipop wrapper material (1) suitable for high speed packaging machines, comprising a flexible mono- or multilayer substrate (5) **characterised in that** said wrapper material (1) further comprises at least one functional coating layer on the outside (4) and/or the inside (6) of said flexible substrate (5), said outside functional coating layer (4) having properties of high heat resistance and/or controlled seal strength, and said inside functional coating layer (6) having properties of controlled seal strength and/or low seal initiation temperature.

2. Lollipop wrapper material (1) as in claim 1 **characterised in that** said functional coating layer inside (6), and/or outside (4), is an all-over and/or a patterned functional coating layer.

3. Lollipop wrapper material (1) as in claim 1 or 2 **characterised in that** said outside functional coating layer (4) is selected from the group consisting of cellulosics, epoxies, and crosslinked polyesters, polyethers, acrylates, polymers and copolymers of vinyl chloride and vinyl acetate and its derivatives, and mixtures thereof.

4. Lollipop wrapper material (1) as in claim 1 or 2 **characterised in that** said inside functional coating layer (6) is selected from the group consisting of olefin and olefin/acid copolymers, ionomers, polymers and copolymers of vinyl chloride, vinylidene chloride, vinyl acetate and its derivatives, modified cellulosics, polyurethanes, polyester polymers and copolymers, polyamide polymers and copolymers, latex based coatings and mixings thereof.

5. Lollipop wrapper material (1) as in any of the previous claims **characterised in that** said flexible mono- or multilayer substrate (5) comprises a film selected from the group consisting of regenerated cellulose, PVC, PET, PP, PP/PS and HDPE.

6. Lollipop wrapper material (1) as in any of the previous claims **characterised in that** said flexible mono- or multilayer substrate (5) comprises at least one heat sealable layer.

7. Lollipop wrapper material (1) as in any of the previous claims **characterised in that** said flexible multilayer substrate (5) is a biaxially oriented polypropylene film comprising on each side a heat sealable acrylic lacquer, and **in that** the high-temperature resistant coating layer is based on nitro-cellulose.

8. Method for the production of a lollipop wrapper material (1) suitable for bunchwrap and twistwrap packaging on high speed packaging machines, comprising a flexible mono- or multilayer substrate (5) **characterised in that** at least one all-over and/or patterned functional coating layer (4,6) is applied on at least one side of said flexible substrate to control heat resistance and/or seal strength and/or seal initiation temperature of said flexible substrate.

9. Method for the production of a lollipop wrapper material (1) as in claim 8 **characterised in that** the polymer used for the functional coating (4,6) is mixed to the printing ink.

10. Method for the production of a lollipop wrapper material (1) as in any of the previous claims **characterised in that** said functional coating (4,6) is positioned in register with the printing on the flexible mono- or multilayer substrate (5).

11. Use of the wrapper material (1) as described in any of the previous claims for lollipop or confectionery (candy) packaging.
